# EUROPEAN PATENT APPLICATION

(11) **EP 1 400 937 A1**
(43) Date of publication of application: **24.03.2004**
(21) Application number: 02292238.9
(22) Date of filing: 12.09.2002
(51) Int. Cl.: G08B 13/14, B60R 25/10

(54) **Communication and burglary-prevention system for motorcycles**

(71) Applicant: TeamSharp Space Tech Inc., Lung-Tan Shiang, Taoyuan Hsien (TW); Kwang Yang Motor Co., Ltd., Kaohsiung City (TW)
(72) Inventor: Ho, Chi-Chang, Lung-Tan Shiang, Taoyuan Hsien (TW); Ma, Wei-Yung, Jung-Li City, Taoyuan Hsien (TW); Chen, Chia-Ping, Hsi-Hu Chen, Chang-Hua Hsien (TW); Kuo, Yang-Chi, Feng-Shan City, Kaohsiung Hsien (TW)
(74) Representative: Bloch, Gérard

(57) **Abstract**

A motorcycle communication and burglary-prevention system includes a motorcycle status detection interface, a motorcycle dynamo driving interface, a dynamo circuit controller, a system circuit controller, a GSM (Global Standard for Mobile Communication) controller, a backup power source, a RF radio frequency (radio frequency) remote controller, a GSM module, a GPS (Global Positioning System) module and a voice communication interface; in addition to the basic burglary prevention functions, via the GSM module, GSM controller and the voice communication interface, the present invention also has functions of satellite coordinate positioning guidance, telephone automatic dial-back, telephone voice deterrence, warning voice return, psychological talk, eavesdropping, lower power detection of a telephone report, emergent rescue seeking, connecting with a communication helmet for conducting hands-free communication , multimedia (entertainment function of MP3, FM radio, etc.), remote controller copy-prevention for providing the motorcycle a preferred burglary-prevention.

## Description

### BACKGROUND OF THE INVENTION

### 1) FIELD OF THE INVENTION

The present invention relates to a motorcycle communication and burglary-prevention system, more especially to a burglary-prevention system to be applied exclusively to a motorcycle; in addition to the structures of a GSM (Global Standard for Mobile Communication) module, a GPS (Global Positioning System) module and a voice communication interface to provide a regular warning for a burglary-prevention device, cut off power, turn on/off all the remote controlled functions, the present invention in a burglary-preventing status is also capable of further passing back the satellite positioning coordinate tracking/guidance, automatically making telephone report, monitoring and talking with a burglar thereby forming a very complete motorcycle burglary-prevention system.

### 2) DESCRIPTION OF THE PRIOR ART

Accordingly, nowadays the common burglary-prevention devices are designed for four-wheeled vehicles through providing alarm deterrent function of informing an improper opening, vibration, damaged switch and automatic cut-off. However, for the motorcycle, only the burglary-prevention sensing status is provided at most for the switch and the vibration. That is just a very simple anti-burglary structure and lacks more advanced design. Especially, as the function of a modem motorcycle becomes more complicated and the price thereof is more expensive, it is apparently that only more sophisticated burglary-prevention function can meet the consumer's demands. The present invention is a motorcycle communication and burglary-prevention system developed according to this idea.

### SUMMARY OF THE INVENTION

Therefore, the primary objective of the present invention is to provide a motorcycle communication and burglary-prevention system not only comprising basic structures of a motorcycle status detection interface, a motorcycle dynamo driving interface, a radio frequency (RF) remote controller, but also including a GSM (Global Standard for Mobile Communication) module, a GSM Controller, a GPS (Global Positioning System) module and a voice communication interface for conducting automatic telephone report and monitoring to automatically dial warning telephone call, make psychological talk, eavesdrop, seek emergent rescue, position and guide via coordinate, automatically dial the GSM automatic communication so as to provide a preferred effect of burglary-prevention.

Another objective of the present invention is to provide a motorcycle communication and burglary-prevention system disposed with backup power to provide reserved electric power for eliminating the malfunction of burglary-prevention and to automatically dial and inform the motorcycle owner when electric power becomes insufficient. Cooperated with said voice function, it also provide a voice reminding of a taking the key and other related voice warning functions thereby making the entire function more sophisticated.

To enable a further understanding of the structures, features and the other objectives of the present invention, the brief description of the drawings below is followed by the detailed description of the preferred embodiment.

### BRIEF DESCRIPTION OF THE DRAWINGS

Figure 1 is a diagram of a system of the present invention.
Figure 2 is a schematic drawing of a systematic detection of the present invention.
Figure 3 is a schematic drawing of an operation flow chart of the present invention.
Figure 4 is a drawing of installing the present invention.

### DETAILED DESCRIPTION OF THE PREFERRED EMBODIMENTS

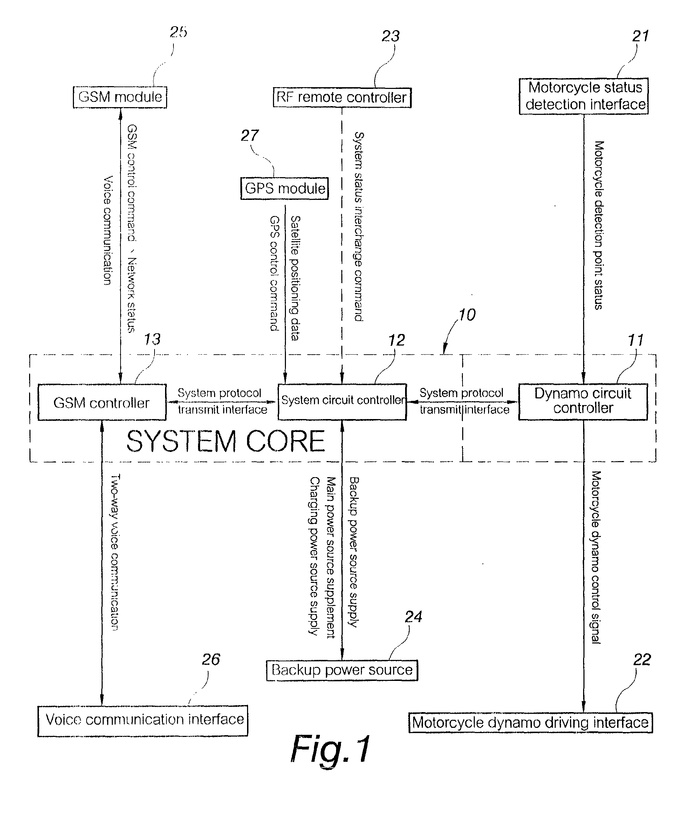

Referring to FIG. 1, the present invention of a motorcycle communication and burglary-prevention system comprises a system core ( 10) assembled by a dynamo circuit controller (11), a system circuit controller (12), a GSM (Global Standard for Mobile Communication) controller ( 13), a GPS (Global Positioning System) controller and structures located on the peripheral positions, such as a motorcycle status detection interface (21), a motorcycle dynamo driv:ng interface(22), a radio frequency (RF) remote controller (23), a backup power source (24), a GSM module (25), a GPS module (27) and a voice communication interface (26); wherein the structures shown in the middle section and on the right side of FIG. 1 are common structures. The status detection interface (21) detects the status signals at various detecting points of the motorcycle and transmits the signals through a special system protocol transmitting interface via the dynamo circuit controller (11) into the system circuit controller (12). Then the system circuit controller (12) reads and judges the status to make the dynamo driving interface (22) conduct a corresponding circuit cut-off thereby providing a burglary-prevention warning, power cut-off or other functions. Furthermore, the RF controller (23) provides commands required for remote entering, such as activating or releasing burglary-prevention, setting dial-back telephone number; the backup power source (24) provides the entire system reserved electric power to assure a normal system operation or supplement electric power in case of insufficiency.

The difference between the present invention and a common motorcycle burglary-prevention device is the disposition of the GSM controller (13), the GSM module (25), the GPS module (27) and the voice communication interface (26). In an burglary-prevention status is triggered, the GSM module (25) automatically dials the mobile phone and transmits the satellite coordinate positioning data via the GPS mo dule (27) at the same time to automatically dial the telephone number to warn the owner, provide the position and moving direction of the motorcycle to the monitor center for tracking the motorcycle and to monitor the burglar's talk and action. In addition, the GPS module (27) cooperates with the electronic map at the monitor center to provide road guidance, route and land object inquisition; the voice communication interface (26) preserves the warning voices, such as psychological talk, deterrence, alarm report or rescue seeking, to provide proper voices under different situations thereby forming a mobile communication and burglary-prevention system.

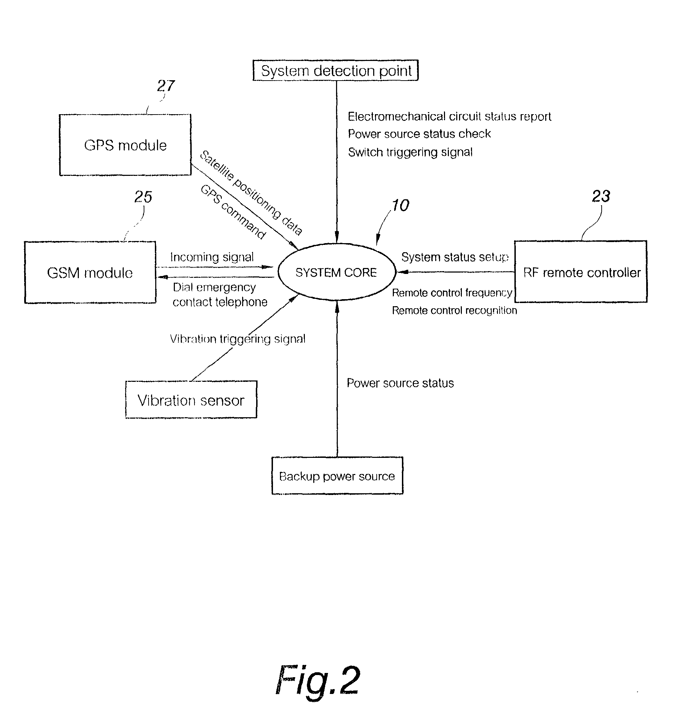

The detecting and controlling method of the entire system, as indicated in FIG. 2, is to use the system core (10) to receive the signals from various system detecting points and sensors (for example, a vibration sensor) to facilitate the system core (10) to conduct an entire control; wherein, the system detecting points include motorcycle circuit status, power source status, switch trigger signals and signals from the lateral frame or main frame of the motorcycle. The RF controller (23) provides the system status setting, remote controlled searching and remote controlled recognition or related controlling functions. The GSM module (25) shown on the left side of FIG. 2 is in charge of the automatic telephone dialing function of the system core (10) and communicating with the incoming signals. The GPS module (27) receives the data of satellite positioning coordinate of the motorcycle itself to be read by the system core (10) for transmitting the data of positioning coordinate via the GSM module (25) thereby providing functions of position tracking, driving navigation and forming the entire system of the present invention.

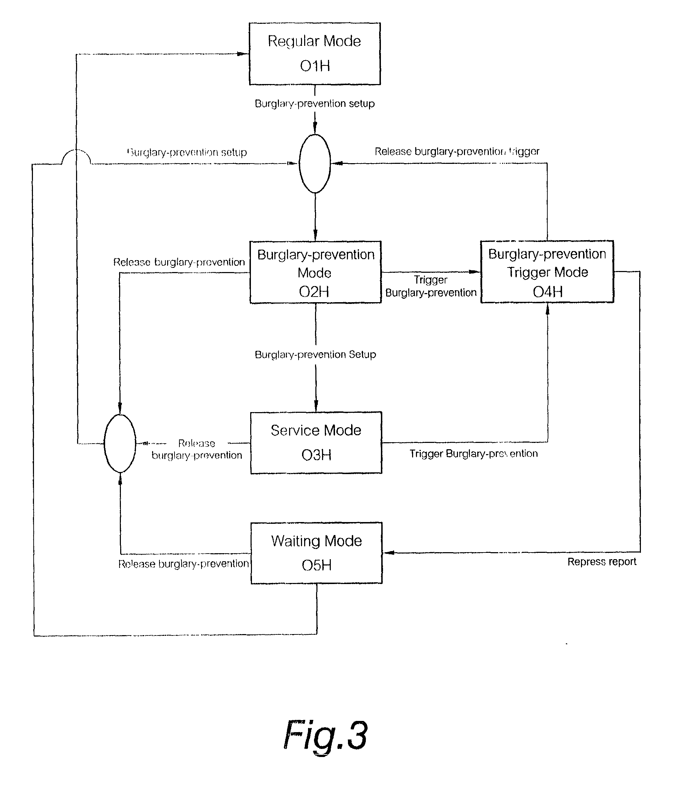

As indicated in FIG. 3, the summary operation mode of the present invention is divided into a regular mode, a burglary-prevention mode, a burglary-prevention trigger mode, a service mode and a waiting mode; wherein, a regular mode means the motorcycle is in an application status to be led into a burglary-prevention mode or a service mode via a controller. In an activated burglary-prevention status, various detection sensing actions are conducted; for any abnormal situation, the burglary-prevention mode is triggered to not only send out warning through indicator lights, horns and cut circuits off, but also automatically dial the telephone through GSM module (25) to report the motorcycle situation and location regularly and continuously to the owner and output the data of satellite position coordinate for conducting position tracking. The service mode conducts various motorcycle setting operations; the waiting mode represses the related automatic report back operation, such as the motorcycle has been towed, thereby making the system enter the regular mode via the remote controller.

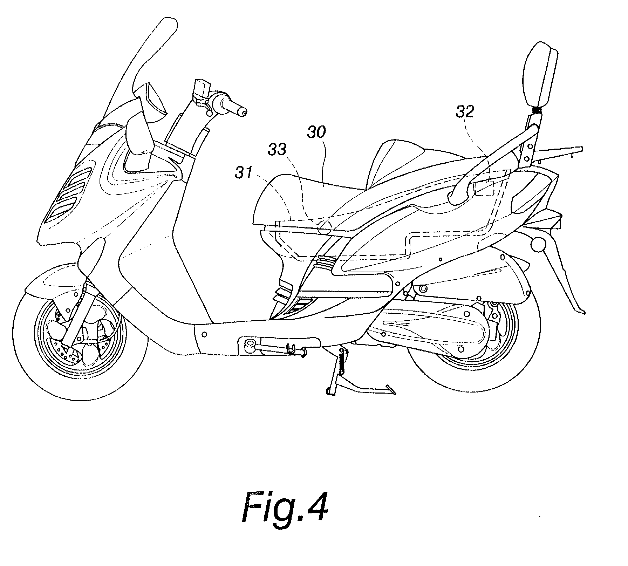

As indicated in FIG. 4, the installation of the present invention is to dispose a concealed electromechanical control box (32) outside a compartment (31) under a seat (30) of the motorcycle. The electromechanical control box (32) comprises mainly the system core (10); furthermore, a motorcycle communication and burglary-prevention device (33) is disposed at a proper position inside the compartment (31) and mainly comprises a detecting device, a sensor, etc., to achieve the function of motorcycle communication and burglary-prevention.

By virtue of the embodiment of the present invention, the following functions are provided:
- 1.: Automatically setting dial-back telephone call: The remote controller sets a dial-back telephone call and multiple sets of dial-back telephone calls to provide voice reminding and warning function after being connected.
- 2.: Voice deterrent function: In a triggered burglary-prevention status , the voice is played to achieve the deterrent function.
- 3.: Sending back the warning voice: Voice warning prevents burglary and towing.
- 4.: Automatic power cut-off and dialing to remotely control power cut-off: Once the burglary-prevention is triggered, it automatically cuts off the power source of the motorcycle and the ignition circuit to achieve the remote control of automatic cut-off through dialing the GSM module disposed inside the motorcycle.
- 5.: Automatically reminding non-activated burglary-prevention: If the owner forgets to activate the burglary-prevention mode, the system automatically dials the owner after a certain time (for example, 5 minutes) for inquiring whether the burglaryprevention system is activated or not; furthermore, the system is capable of actively and automatically detecting the status of each detecting point and reporting in voice.
- 6.: Conducting telephone remote controlling to release burglarprevention and turn on/off the engine.
- 7.: Providing psychological talk and eavesdropping functions: When receiving an abnormal situation reporting, the owner can dial the motorcycle for deterring the burglar through psychological talk or conducting monitoring operation.
- 8.: Automatically reporting abnormal power source: When the power source is damaged or becomes insufficient, the system automatically dials and informs the owner.
- 9.: Reminding of taking the key after park: When the key is not taken after the motorcycle has been turned off, the system reminds the owner in voice.
- 10.: Emergent rescue seeking: In case of an emergent event, the rescue seeking function key of the controller is pressed to automatically dial to seek rescue and talk with the person on the other side.
- 11.: Connecting with a communication helmet: A wireless and hands-free communication is conducted through connection.
- 12.: Sending back the positioning coordinate: Therefore, the system has the function of driving navigation, burglary-prevention and position tracking.

In summation of the abovementioned, the present invention provides a motorcycle burglary-prevention system connected with the GSM module, the GPS module and the voice communication interface; in a state of triggered burglary-prevention, the system is capable of automatically dialing to inform the owner; the system has many extensive designs of related monitoring, voice deterrence, psychological talk and emergent rescue seeking thereby forming a burglary-prevention system to be exclusively applied by a motorcycle.

It. is of course to be understood that the embodiment described herein is merely illustrative of the principles of the invention and that a wide variety of modifications thereto may be effected by persons skilled in the art without departing from the spirit and scope of the invention as set fonh in the following claims.

## Claims

1. A motorcycle communication and burglary-prevention system comprises:
a system core includes a dynamo circuit controller, a system circuit controller and a GSM (Global Standard for Mobile Communication) controller; a system transmit interface connects all the controller;
a status detection interface detects status of the electromechanical circuit, the power source, the foot support, the switch and the compartment under the seat as well as sends the status data back into the dynamo circuit controller;
a dynamo driving interface receives the driving signals of the dynamo circuit controller and determines the on/off of each controller of the motorcycle;
a RF ( Radio Frequency) remote controller controls remotely the sending of the controlling command into the system circuit controller to conduct system status setting, the motorcycle searching and rescue seeking;
a GSM module sends and receives the signal of the GSM controller to conduct command controlling, the network status and the voice communication.
a voice communication interface is capable of making two-way communication with the GSM controller and of selectively outputting the pre-recorded voice via the GSM module;
by virtue of said structures, a motorcycle burglary-prevention system in a mobile voice communication status is formed.

2. The motorcycle communication and burglary-prevention system according to Claim 1 further comprises a GPS (Global Positioning System) module for outputting the satellite positioning data of the motorcycle itself thereby providing a system burglary-prevention and navigation function.

3. The motorcycle communication and burglary-prevention system according to Claims 1 further comprises a backup power source for providing reserved power source and supplementing the main power source.

4. The motorcycle communication and burglary-prevention system according to Claims 2 further comprises a backup power source for providing reserved power source and supplementing the main power source.

5. The motorcycle communication and burglary-prevention system according to Claims 1 further connects with a communication helmet for conducting hands-free communication.

6. The motorcycle communication and burglary-prevention system according to Claims 2 further connects with a communication helmet for conducting hands-free communication.

7. The motorcycle communication and burglary-prevention system according to Claims 1, wherein multiple sets of dial-back telephone are set via the remote controller thereby providing sequential dialing if the call has not been dialed through; after being dialed through, it provides voice warning or reminding.

8. The motorcycle communication and burglary-prevention system according to Claims 2, wherein multiple sets of dial-back telephone are set via the remote controller thereby providing sequential dialing if the call has not been dialed through; after being dialed through, it provides voice warning or reminding.

9. The motorcycle communication and burglary-prevention system according to Claims 1, wherein dialing a telephone number set by the GSM module is capable of conducting long distance remote controlling power cut-off, turning the motorcycle engine on/off, eavesdropping, setting and releasing burglary-prevention.

10. The motorcycle communication and burglary-prevention system according to Claims 2, wherein dialing a telephone number set by the GSM module is capable of conducting long distance remote controlling power cut-off, turning the motorcycle engine on/off, eavesdropping, setting and releasing burglary-prevention.

11. The motorcycle communication and burglary-prevention system according to Claims 1, wherein the connected GSM module and the voice communication interface provides telephone dialing voice remind function without setting burglary-prevention and active telephone dialing to remind the owner of abnormal electric power status and taking the key.

12. The motorcycle communication and burglary-prevention system according to Claims 2, wherein the connected GSM module and the voice communication interface provides telephone dialing voice remind function without setting burglary-prevention and active telephone dialing to remind the owner of abnormal electric power status and taking the key.
